# EUROPEAN PATENT APPLICATION

(11) **EP 4 513 168 A1**
(43) Date of publication of application: **26.02.2025**
(21) Application number: 22940761.4
(22) Date of filing: 10.11.2022
(51) Int. Cl.: G01N 21/17, G01N 21/03

(54) **HORN-SHAPED PHOTOACOUSTIC CELL FOR PHOTOACOUSTIC SPECTROSCOPY GAS DETECTION**

(30) Priority: 05.05.2022 CN 202210482478
(71) Applicant: Electric Power Research Institute. China Southern Power Grid, Guangzhou, Guangdong 510663 (CN); Maintenance & Test Centre, CSG EHV Power Transmission Company, Guangzhou, Guangdong 510700 (CN)
(72) Inventor: LIAO, Jianping, Guangzhou, Guangdong 510663 (CN); WANG, Dibo, Guangzhou, Guangdong 510663 (CN); PENG, Xiang, Guangzhou, Guangdong 510663 (CN); ZHUO, Ran, Guangzhou, Guangdong 510663 (CN); LIU, Zhifeng, Guangzhou, Guangdong 510663 (CN); HUANG, Zhiming, Guangzhou, Guangdong 510663 (CN); LUO, Yan, Guangzhou, Guangdong 510663 (CN)
(74) Representative: von Hirschhausen, Helge
(86) International application number: PCT/CN2022/131051
(87) International publication number: WO 2023/213067

(57) **Abstract**

A horn-shaped photoacoustic cell for photoacoustic spectroscopy gas detection. The horn-shaped photoacoustic cell of the present invention comprises a photoacoustic cell housing, an air inlet, an air outlet, horn-shaped buffer cavities, a resonant cavity, a sound sensor, a light inlet and a light outlet. Two horn-shaped buffer cavities arranged symmetrically with respect to the longitudinal symmetry axis of the photoacoustic cell housing are provided in the photoacoustic cell housing the central axis of each horn-shaped buffer cavity and the transverse symmetry axis of the photoacoustic cell are located on the same straight line; the horn-shaped buffer cavity on one side is connected to the air inlet; the horn-shaped buffer cavity on the other side is connected to the air outlet; the resonant cavity is communicated between the two horn-shaped buffer cavities; the sound sensor is close to the resonant cavity; and the light inlet and the light outlet are respectively formed at two ends of the photoacoustic cell housing. According to the present invention, the structure of a resonant photoacoustic cell is optimized, the horn-shaped photoacoustic cell is designed, and through experimental tests, the sensitivity of the horn-shaped photoacoustic cell is higher than the sensitivity of existing cylindrical, T-shaped and H-shaped resonant photoacoustic cells.

## Description

The present application claims the priority to Chinese Patent Application No. 202210482478.7, titled "HORN-SHAPED PHOTOACOUSTIC CELL FOR PHOTOACOUSTIC SPECTROSCOPY GAS DETECTION", filed with the China National Intellectual Property Administration on May 5, 2022, the entire disclosure of which is incorporated herein by reference.

### FIELD

The present application relates to the technical field of gas detection, and in particular to a horn-shaped photoacoustic cell for photoacoustic spectroscopy gas detection.

### BACKGROUND

Studies have shown that, the photoacoustic effect of a gas can be used for measuring the gas. In a photoacoustic spectroscopy gas detection system, the detection sensitivity is usually a crucial factor to be considered in design of the detection system.

A photoacoustic cell is an important component of the photoacoustic spectroscopy gas detection system. The photoacoustic spectroscopy gas detection system usually has relatively high sensitivity when the photoacoustic cell operates in a resonant state, and the sensitivity of the photoacoustic spectroscopy gas detection system depends a lot on the structure of the photoacoustic cell.

In the conventional technology, structures of resonant photoacoustic cells are mostly cylindrical, T-shaped and H-shaped. These types of resonant photoacoustic cells are restricted in geometrical shapes and structures, and thus can easily block a light beam, causing relatively large errors in results of gas detection and relatively low sensitivity.

### SUMMARY

There is provided a horn-shaped photoacoustic cell for photoacoustic spectroscopy gas detection, which can solve the technical problem of low sensitivity of a resonant photoacoustic cell in the conventional technology.

In a first aspect of the present application, a horn-shaped photoacoustic cell for photoacoustic spectroscopy gas detection is provided. The horn-shaped photoacoustic cell includes a photoacoustic cell housing, a gas inlet, a gas outlet, horn-shaped buffer chambers, a resonant cavity, a sound sensor, a light inlet and a light outlet, wherein
the two horn-shaped buffer chambers are arranged inside the photoacoustic cell housing and are symmetric relative to a longitudinal symmetry axis of the photoacoustic cell housing, and a central axis of each of the two horn-shaped buffer chambers is on a same straight line as a transverse symmetry axis of the photoacoustic cell housing;
the horn-shaped buffer chamber on the left is connected to the gas inlet, the horn-shaped buffer chamber on the right is connected to the gas outlet, and the resonant cavity is communicated between the two horn-shaped buffer chambers;
the sound sensor is located on the longitudinal symmetry axis, and is close to or connected to the resonant cavity to detect an acoustic signal produced by a gas in the resonant cavity; and
the light inlet is provided at one end of the photoacoustic cell housing, and the light outlet is provided at the other end of the photoacoustic cell housing.

According to a possible embodiment of the present application, the resonant cavity is in a pipe shape.

According to a possible embodiment of the present application, a ratio of a diameter of a largest cross section of each of the two horn-shaped buffer chambers to a diameter of a cross section of the resonant cavity is larger than or equal to 5:1.

According to a possible embodiment of the present application, in a case that the sound sensor is close to the resonant cavity, a distance between a bottom portion of the sound sensor and an outer wall of the resonant cavity is smaller than or equal to 0.5 mm.

According to a possible embodiment of the present application, the sound sensor is a microphone, a piezoelectric ceramic microphone, or an optical fiber acoustic sensor.

According to a possible embodiment of the present application, the gas inlet and the gas outlet are arranged opposite to each other and are symmetric relative to the longitudinal symmetry axis of the photoacoustic cell housing.

According to a possible embodiment of the present application, the light inlet and/or the light outlet are arranged at a middle portion of the corresponding end of the photoacoustic cell housing.

According to a possible embodiment of the present application, the light inlet and the light outlet are arranged opposite to each other.

According to a possible embodiment of the present application, a high-transmittance lens is mounted at the light inlet, and a reflecting mirror is mounted at the light outlet.

According to a possible embodiment of the present application, the horn-shaped photoacoustic cell further includes a base, and the base is connected to a bottom portion of the photoacoustic cell housing.

It can be seen from the above technical solutions that, the present application has the following advantages.

The horn-shaped photoacoustic cell according to the present application includes the photoacoustic cell housing, the gas inlet, the gas outlet, the horn-shaped buffer chambers, the resonant cavity, the sound sensor, the light inlet and the light outlet. The two horn-shaped buffer chambers are arranged inside the photoacoustic cell housing and are symmetric relative to the longitudinal symmetry axis of the photoacoustic cell housing, and the central axis of each of the two horn-shaped buffer chambers is on the same straight line as the transverse symmetry axis of the photoacoustic cell housing. The horn-shaped buffer chamber on the left is connected to the gas inlet, and the horn-shaped buffer chamber on the right is connected to the gas outlet. The resonant cavity is communicated between the two horn-shaped buffer chambers. The sound sensor is close to the resonant cavity to detect the acoustic signal produced by the gas in the resonant cavity. The light inlet is provided at the one end of the photoacoustic cell housing and the light outlet is provided at the other end of the photoacoustic cell housing. In the present application, the structure of the resonant photoacoustic cell is optimized, and the horn-shaped photoacoustic cell is designed. According to experimental tests, the sensitivity of the horn-shaped photoacoustic cell is higher than the sensitivity of existing cylindrical, T-shaped and H-shaped resonant photoacoustic cells. Therefore, the technical problem of low sensitivity of the resonant photoacoustic cell in the conventional technology can be solved.

### BRIEF DESCRIPTION OF THE DRAWINGS

For more clearly illustrating the technical solutions in the embodiments of the present application or in the conventional technology, drawings referred to describe the embodiments or the conventional technology will be briefly described hereinafter. Apparently, the drawings in the following description are only some examples of the present application, and for those skilled in the art, other drawings may be obtained based on these drawings without any creative efforts.

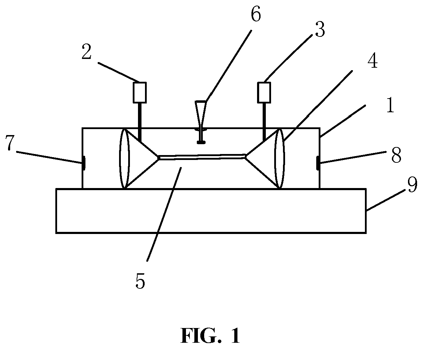

FIG. 1 is a schematic view showing the structure of a horn-shaped photoacoustic cell for photoacoustic spectroscopy gas detection according to an optional embodiment of the present application.

### Reference numerals:

| | | | |
|---|---|---|---|
| 1 | photoacoustic cell housing, | 2 | gas inlet, |
| 3 | gas outlet, | 4 | horn-shaped buffer chamber, |
| 5 | resonant cavity, | 6 | sound sensor, |
| 7 | light inlet, | 8 | light outlet, |
| 9 | base. | | |

### DETAILED DESCRIPTION OF THE EMBODIMENTS

A horn-shaped photoacoustic cell for photoacoustic spectroscopy gas detection is provided according to an embodiment of the present application, which can solve the technical problem of low sensitivity of a resonant photoacoustic cell in the conventional technology.

In order to make the purposes, features, and advantages of the present application more obvious and understandable, technical solutions in the embodiments of the present application will be clearly and completely described below in conjunction with the accompanying drawings in the embodiments of the present application. Obviously, the embodiments described below are merely some, but not all, of the embodiments of the present application. Based on the embodiments of the present application, all other embodiments obtained by those skilled in the art without creative efforts fall within the scope of protection of the present application.

FIG. 1 is a schematic view showing the structure of a horn-shaped photoacoustic cell for photoacoustic spectroscopy gas detection according to an embodiment of the present application.

Referring to FIG. 1, the horn-shaped photoacoustic cell according to the embodiment of the present application includes a photoacoustic cell housing 1, a gas inlet 2, a gas outlet 3, horn-shaped buffer chambers 4, a resonant cavity 5, a sound sensor 6, a light inlet 7 and a light outlet 8.

The two horn-shaped buffer chambers 4 are arranged inside the photoacoustic cell housing 1 and are symmetric relative to a longitudinal symmetry axis of the photoacoustic cell housing 1, and a central axis of each of the two horn-shaped buffer chambers 4 is on a same straight line as a transverse symmetry axis of the photoacoustic cell housing 1. The horn-shaped buffer chamber 4 on the left is connected to the gas inlet 2, and the horn-shaped buffer chamber 4 on the right is connected to the gas outlet 3. The resonant cavity 5 is communicated between the two horn-shaped buffer chambers 4. The sound sensor 6 is located on the longitudinal symmetry axis, and is close to or connected to the resonant cavity 5 to detect an acoustic signal produced by a gas in the resonant cavity 5. The light inlet 7 is provided at one end of the photoacoustic cell housing 1, and the light outlet 8 is provided at the other end of the photoacoustic cell housing 1.

Further, the horn-shaped photoacoustic cell further includes a base 9, and the base 9 is connected to a bottom portion of the photoacoustic cell housing 1.

According to the above embodiment of the present application, the horn-shaped buffer chambers 4 are of the above symmetric structure, so that the acoustic signal produced by the photoacoustic effect is maximal on the longitudinal symmetry axis of the photoacoustic cell housing 1. The sound sensor 6 is located on the longitudinal symmetry axis and is close to or connected to the resonant cavity 5, thereby improving the sensitivity of gas detection of the photoacoustic cell.

As a possible embodiment, the resonant cavity 5 is in a pipe shape. A ratio of a diameter of a largest cross section of each of the two horn-shaped buffer chambers 4 to a diameter of a cross section of the resonant cavity 5 is larger than or equal to 5:1.

With the arrangement of the present embodiment, relative sizes of the horn-shaped buffer chamber 4 and the resonant cavity 5 are limited, thereby enhancing the isolating effect of the horn-shaped buffer chamber 4 on a coherent noise.

The sound sensor 6 may be close to or connected to the resonant cavity 5. As a possible embodiment, in a case that the sound sensor 6 is close to the resonant cavity 5, a distance between a bottom portion of the sound sensor 6 and an outer wall of the resonant cavity 5 is smaller than or equal to 0.5 mm, so as to ensure the detection precision of the sound sensor 6 when detecting the acoustic signal.

The sound sensor 6 may be a microphone, a piezoelectric ceramic microphone, or an optical fiber acoustic sensor. As a preferred embodiment, the sound sensor 6 is a microphone with high sensitivity.

As a possible embodiment, the gas inlet 2 and the gas outlet 3 are arranged opposite to each other and are symmetric relative to the longitudinal symmetry axis of the photoacoustic cell housing 1. By providing the gas inlet 2 and the gas outlet 3, a waste gas inside the photoacoustic cell can be cleaned, and the flow of the gas inside the photoacoustic cell can be ensured, which is beneficial to enhancing the sensitivity of gas detection.

The detection principle of the photoacoustic cell is as follows. The gas is supplied into the photoacoustic cell through the gas inlet 2, and the gas inside the photoacoustic cell is discharged through the gas outlet 3, forming a gas flow inside the photoacoustic cell. A laser beam radiates on the gas inside the photoacoustic cell, and the gas absorbs the modulated light to generate an acoustic wave. Further, a small pressure change of the acoustic wave inside the photoacoustic cell is converted into an electrical signal by the microphone, which is transmitted to an external circuit for detection.

Based on the detection principle of the photoacoustic cell, as a possible embodiment, the light inlet 7 and/or the light outlet 8 are arranged at a middle portion of the corresponding end of the photoacoustic cell housing 1.

Preferably, the light inlet 7 and the light outlet 8 are each arranged at the middle portion of the corresponding end of the photoacoustic cell housing 1, and are arranged opposite to each other.

With such arrangement that the light inlet 7 and the light outlet 8 are each arranged at the middle portion of the corresponding end of the photoacoustic cell housing 1, and are arranged opposite to each other, the light beam can enter the photoacoustic cell housing 1 along the transverse symmetry axis of the photoacoustic cell housing 1, and radiates on the gas in the horn-shaped buffer chamber 4 without obstruction, thereby effectively ensuring the sensitivity of gas detection.

As a possible embodiment, a high-transmittance lens is mounted at the light inlet 7, and a reflecting mirror is mounted at the light outlet 8. With such arrangement, the transmission of the light beam can be enhanced, which facilitates the photoacoustic effect of the gas inside the resonant cavity 5.

To measure the performance of the horn-shaped photoacoustic cell according to the above embodiment of the present application, models are established with COMSOL software based on finite element analysis in the present application, and the sensitivities of a cylindrical photoacoustic cell, a T-shaped photoacoustic cell, an H-shaped photoacoustic cell, and the horn-shaped photoacoustic cell are analyzed and compared. It is found through simulations that, the sensitivity of the horn-shaped photoacoustic cell in a resonant state is 12%, 36%, and 18% higher than that of the other three types of photoacoustic cells respectively.

In addition, experimental tests are also conducted according to the present application, and sensitivities of the cylindrical photoacoustic cell, the T-shaped photoacoustic cell, the H-shaped photoacoustic cell, and the horn-shaped photoacoustic cell in the resonant state are analyzed and compared. The results have shown that, the sensitivity of the horn-shaped photoacoustic cell in the resonant state is 6%, 15%, and 9% higher than that of the other three types of photoacoustic cells respectively. Therefore, the horn-shaped photoacoustic cell has a better performance and higher designability in the resonant state than the other three types of photoacoustic cells, and thus has great application prospects.

The above embodiments are only intended to describe the technical solutions of the present application, and not for limiting the scope of the application. Although the application has been described in detail with reference to the above embodiments, it shall be understood by those skilled in the art that the technical solutions described in the above embodiments may be modified, or some technical features thereof may be substituted by equivalents. Such modifications and substitutions will not make the essence of the corresponding technical solutions deviate from the spirit and scope of the technical solutions of the embodiments of the present application.

## Claims

1. A horn-shaped photoacoustic cell for photoacoustic spectroscopy gas detection, comprising a photoacoustic cell housing, a gas inlet, a gas outlet, horn-shaped buffer chambers, a resonant cavity, a sound sensor, a light inlet and a light outlet, wherein
the two horn-shaped buffer chambers are arranged inside the photoacoustic cell housing and are symmetric relative to a longitudinal symmetry axis of the photoacoustic cell housing, and a central axis of each of the two horn-shaped buffer chambers is on a same straight line as a transverse symmetry axis of the photoacoustic cell housing;
the horn-shaped buffer chamber on the left is connected to the gas inlet, the horn-shaped buffer chamber on the right is connected to the gas outlet, and the resonant cavity is communicated between the two horn-shaped buffer chambers;
the sound sensor is located on the longitudinal symmetry axis, and is close to or connected to the resonant cavity to detect an acoustic signal produced by a gas in the resonant cavity; and
the light inlet is provided at one end of the photoacoustic cell housing, and the light outlet is provided at the other end of the photoacoustic cell housing.

2. The horn-shaped photoacoustic cell for photoacoustic spectroscopy gas detection according to claim 1, wherein the resonant cavity is in the shape of a pipe.

3. The horn-shaped photoacoustic cell for photoacoustic spectroscopy gas detection according to claim 2, wherein a ratio of a diameter of a largest cross section of each of the two horn-shaped buffer chambers to a diameter of a cross section of the resonant cavity is larger than or equal to 5:1.

4. The horn-shaped photoacoustic cell for photoacoustic spectroscopy gas detection according to claim 1, wherein in a case that the sound sensor is close to the resonant cavity, a distance between a bottom portion of the sound sensor and an outer wall of the resonant cavity is smaller than or equal to 0.5 mm.

5. The horn-shaped photoacoustic cell for photoacoustic spectroscopy gas detection according to claim 1, wherein the sound sensor is a microphone, a piezoelectric ceramic microphone, or an optical fiber acoustic sensor.

6. The horn-shaped photoacoustic cell for photoacoustic spectroscopy gas detection according to claim 1, wherein the gas inlet and the gas outlet are arranged opposite to each other and are symmetric relative to the longitudinal symmetry axis of the photoacoustic cell housing.

7. The horn-shaped photoacoustic cell for photoacoustic spectroscopy gas detection according to claim 1, wherein the light inlet and/or the light outlet are arranged at a middle portion of the corresponding end of the photoacoustic cell housing.

8. The horn-shaped photoacoustic cell for photoacoustic spectroscopy gas detection according to claim 7, wherein the light inlet and the light outlet are arranged opposite to each other.

9. The horn-shaped photoacoustic cell for photoacoustic spectroscopy gas detection according to claim 1, wherein a high-transmittance lens is mounted at the light inlet, and a reflecting mirror is mounted at the light outlet.

10. The horn-shaped photoacoustic cell for photoacoustic spectroscopy gas detection according to any one of claims 1 to 9, further comprising a base, wherein the base is connected to a bottom portion of the photoacoustic cell housing.
